# EUROPEAN PATENT APPLICATION

(11) **EP 4 592 497 A1**
(43) Date of publication of application: **30.07.2025**
(21) Application number: 24200726.8
(22) Date of filing: 17.09.2024
(51) Int. Cl.: F01D 5/06, F01D 5/08

(54) **HEAT COVER FOR ROTOR OF GAS TURBINE ENGINE**

(30) Priority: 26.01.2024 GB 202401016
(71) Applicant: Siemens Energy Global GmbH & Co. KG, 81739 München (DE)
(72) Inventor:

(57) **Abstract**

A rotor (134) includes a rotor disk (136), a rear shaft (140) disposed downstream of the rotor disk (136), a central tie bolt (142) that extends along a central axis (112) and connects the rotor disk (136) and the rear shaft (140) in a direction parallel to the central axis (112), the central tie bolt (142) being surrounded by the rotor disk (136) and the rear shaft (140), a space (146) formed between the central tie bolt (142), the rotor disk (136), and the rear shaft (140), a support cone (144) disposed within the space (146) that supports the central tie bolt (142), a first side (202) of the support cone (144) being in contact with the central tie bolt (142), and a heat cover (208) disposed adjacent to the support cone (144) to separate the space (146) into a cooling flow path (218) to allow a passage of a cooling flow (222) and a cone space (220) in which the cooling flow (222) does not pass, the support cone (144) disposed within the cone space (220).

## Description

### BACKGROUND

A gas turbine engine typically includes a compressor section, a turbine section, and a combustion section disposed therebetween. The compressor section typically includes multiple stages of rotating compressor blades and stationary compressor vanes to produce compressed air. The combustion section typically includes a plurality of combustors to produce hot working flow by combusting mixture of the compressed air and fuel. The turbine section typically includes multiple stages of rotating turbine blades and stationary turbine vanes to expand the hot working fluid and to convert fluid energy to mechanical energy. The rotating turbine blades and stationary turbine vanes often operate in a high temperature environment and are internally cooled.

The gas turbine engine typically includes a rotor that rotates the rotating compressor blades and the rotating turbine blades. The rotor may include a central tie bolt and a support cone that supports the central tie bolt. A sufficient support to the central tie bolt by the support cone needs to be maintained during operations of the gas turbine engine.

### BRIEF SUMMARY

In one aspect, a rotor is provided. The rotor includes a rotor disk, a rear shaft disposed downstream of the rotor disk, a central tie bolt that extends along a central axis and connects the rotor disk and the rear shaft in a direction parallel to the central axis, the central tie bolt being surrounded by the rotor disk and the rear shaft, a space formed between the central tie bolt, the rotor disk, and the rear shaft, a support cone disposed within the space that supports the central tie bolt, a first side of the support cone being in contact with the central tie bolt, and a heat cover disposed adjacent to the support cone to separate the space into a cooling flow path to allow a passage of a cooling flow and a cone space in which the cooling flow does not pass, the support cone disposed within the cone space.

### BRIEF DESCRIPTION OF THE DRAWINGS

To easily identify the discussion of any particular element or act, the most significant digit or digits in a reference number refer to the figure number in which that element is first introduced.
FIG. 1 is a longitudinal cross-sectional view of a gas turbine engine taken along a plane that contains a longitudinal axis or central axis.
FIG. 2 is a cross section view of a first portion of the gas turbine engine of FIG. 1.
FIG. 3 is a cross section view of a second portion of the gas turbine engine of FIG. 1.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including", "having", and "comprising", as well as derivatives thereof, mean inclusion without limitation. The singular forms "a", "an", and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith" as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In the description, the terms "axial" or "axially" refer to a direction along a longitudinal axis of a gas turbine engine. The terms "radial" or "radially" refer to a direction perpendicular to the longitudinal axis of the gas turbine engine. The terms "downstream" or "aft" refer to a direction along a flow direction. The terms "upstream" or "forward" refer to a direction against the flow direction.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

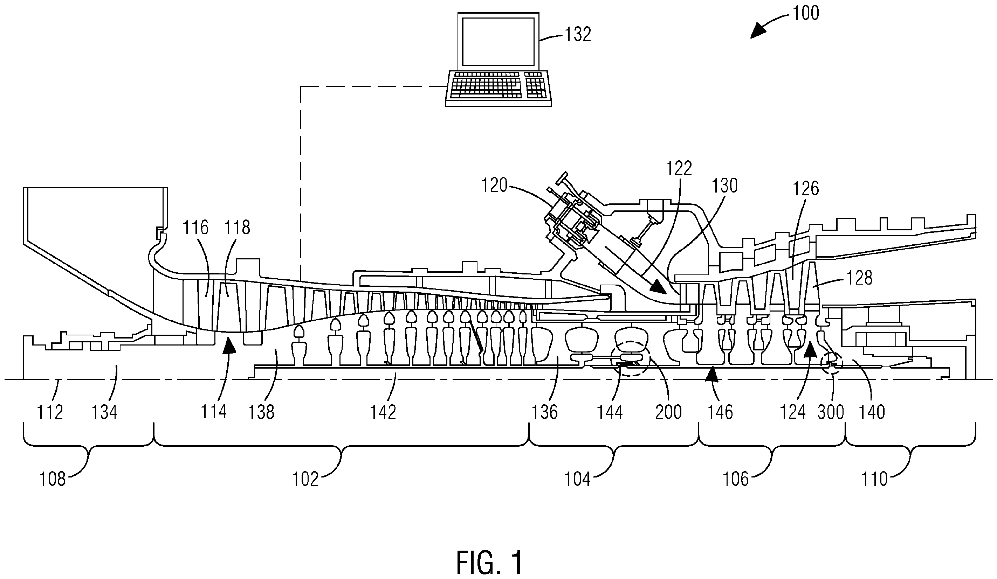

FIG. 1 illustrates an example of a gas turbine engine 100 including a compressor section 102, a combustion section 104, and a turbine section 106 arranged along a central axis 112. The compressor section 102 includes a plurality of compressor stages 114 with each compressor stage 114 including a set of stationary compressor vanes 116 or adjustable guide vanes and a set of rotating compressor blades 118. A rotor 134 supports the rotating compressor blades 118 for rotation about the central axis 112 during operation. In some constructions, a single one-piece rotor 134 extends the length of the gas turbine engine 100 and is supported for rotation by a bearing at either end. In other constructions, the rotor 134 is assembled from several separate spools that are attached to one another or may include multiple disk sections that are attached via a bolt or plurality of bolts.

The compressor section 102 is in fluid communication with an inlet section 108 to allow the gas turbine engine 100 to draw atmospheric air into the compressor section 102. During operation of the gas turbine engine 100, the compressor section 102 draws in atmospheric air and compresses that air for delivery to the combustion section 104. The illustrated compressor section 102 is an example of one compressor section 102 with other arrangements and designs being possible.

In the illustrated construction, the combustion section 104 includes a plurality of separate combustors 120 that each operate to mix a flow of fuel with the compressed air from the compressor section 102 and to combust that air-fuel mixture to produce a flow of high temperature, high pressure combustion gases or exhaust gas 122. Of course, many other arrangements of the combustion section 104 are possible.

The turbine section 106 includes a plurality of turbine stages 124 with each turbine stage 124 including a number of stationary turbine vanes 126 and a number of rotating turbine blades 128. The turbine stages 124 are arranged to receive the exhaust gas 122 from the combustion section 104 at a turbine inlet 130 and expand that gas to convert thermal and pressure energy into rotating or mechanical work. The turbine section 106 is connected to the compressor section 102 to drive the compressor section 102. For gas turbine engines 100 used for power generation or as prime movers, the turbine section 106 is also connected to a generator, pump, or other device to be driven. As with the compressor section 102, other designs and arrangements of the turbine section 106 are possible.

An exhaust portion 110 is positioned downstream of the turbine section 106 and is arranged to receive the expanded flow of exhaust gas 122 from the final turbine stage 124 in the turbine section 106. The exhaust portion 110 is arranged to efficiently direct the exhaust gas 122 away from the turbine section 106 to assure efficient operation of the turbine section 106. Many variations and design differences are possible in the exhaust portion 110. As such, the illustrated exhaust portion 110 is but one example of those variations.

A control system 132 is coupled to the gas turbine engine 100 and operates to monitor various operating parameters and to control various operations of the gas turbine engine 100. In preferred constructions the control system 132 is typically micro-processor based and includes memory devices and data storage devices for collecting, analyzing, and storing data. In addition, the control system 132 provides output data to various devices including monitors, printers, indicators, and the like that allow users to interface with the control system 132 to provide inputs or adjustments. In the example of a power generation system, a user may input a power output set point and the control system 132 may adjust the various control inputs to achieve that power output in an efficient manner.

The control system 132 can control various operating parameters including, but not limited to variable inlet guide vane positions, fuel flow rates and pressures, engine speed, valve positions, generator load, and generator excitation. Of course, other applications may have fewer or more controllable devices. The control system 132 also monitors various parameters to assure that the gas turbine engine 100 is operating properly. Some parameters that are monitored may include inlet air temperature, compressor outlet temperature and pressure, combustor outlet temperature, fuel flow rate, generator power output, bearing temperature, and the like. Many of these measurements are displayed for the user and are logged for later review should such a review be necessary.

The rotor 134 includes a plurality of rotor disks 136, a front shaft 138 disposed at a front end of the rotor 134, and a rear shaft 140 disposed at a rear end of the rotor 134. The rear shaft 140 is disposed downstream of the last rotor disk 136 which supports the last rotating turbine blade 128 of the last turbine stage 124.

A central tie bolt 142 extends along the central axis 112 and connects the plurality of rotor disks 136, the front shaft 138, and the rear shaft 140 in a direction parallel to the central axis 112. The central tie bolt 142 is surrounded by the plurality of rotor disks 136, the front shaft 138, and the rear shaft 140 around the central axis 112. A plurality of support cones 144 are disposed in the direction parallel to the central axis 112 to support the central tie bolt 142 and to tune the natural frequencies of the central tie bolt 142. A space 146 is formed between the central tie bolt 142, the plurality of rotor disks 136, and the rear shaft 140.

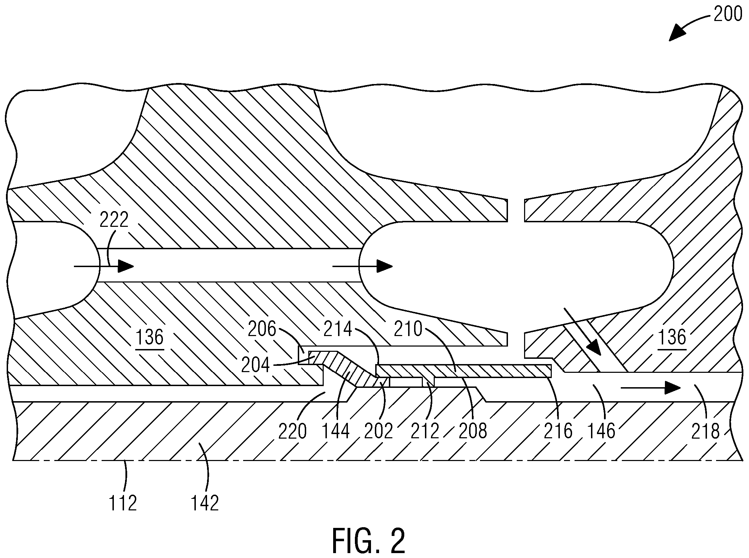

FIG. 2 is a cross section view of a first portion 200 of the gas turbine engine 100 of FIG. 1. The first portion 200 may be in the mid section between the compressor section 102 and the turbine section 106.

The support cone 144 is disposed between an upstream rotor disk 136 and a downstream rotor disk 136 that are directly adjacent to one another. The support cone 144 has a general Z shape having a first side 202 and a second side 204. The first side 202 is in contact with the central tie bolt 142. The second side 204 is inserted into a first annular groove 206 that is defined at a downstream side of the upstream rotor disk 136. The first side 202 tightly contacts with the central tie bolt 142, such as by a shrink fitting. The second side 204 loosely contacts with the upstream rotor disk 136.

A heat cover 208 is disposed adjacent to and upstream of the support cone 144. The heat cover 208 has a first plate 210 and a second plate 212 that forms a T shaped cross section. The first plate 210 and the second plate 212 are cylindrical plates around the central axis 112. The first plate 210 extends parallel to the central axis 112. A first end 214 of the first plate 210 is disposed radially outward of the support cone 144. A second end 216 of the first plate 210 is disposed radially downward of the downstream rotor disk 136. The second plate 212 is connected to the first plate 210 and extends between the central tie bolt 142 and the first plate 210. The second plate 212 tightly contacts with the central tie bolt 142, such as by a shrink fitting.

The support cone 144 and the heat cover 208 are disposed within the space 146. The heat cover 208 separates the space 146 into a cooling flow path 218 and a cone space 220. The cooling flow path 218 allows a passage of a cooling flow 222 and guides the cooling flow 222 toward the turbine section 106. The cone space 220 does not pass the cooling flow 222. The support cone 144 is disposed within the cone space 220.

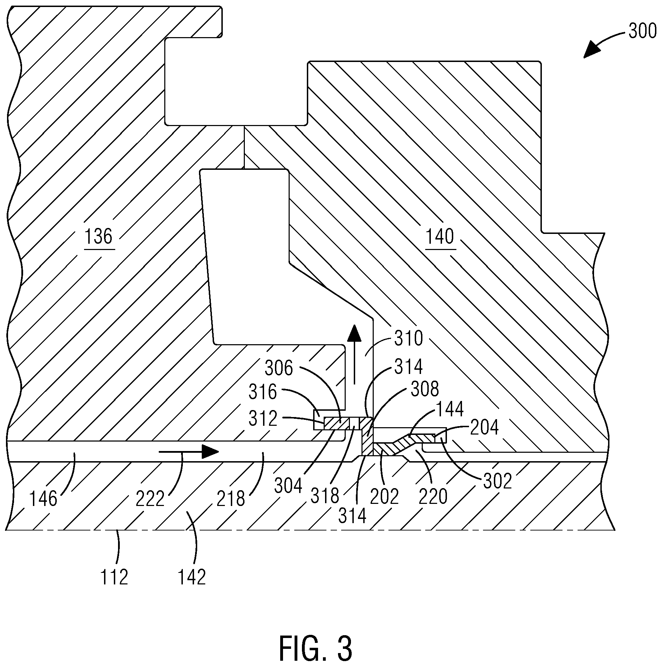

FIG. 3 is a cross section view of a second portion 300 of the gas turbine engine of FIG. 1. The second portion 300 may be in the rear section including the last turbine stage 124 and the exhaust portion 110.

The support cone 144 is disposed between the rotor disk 136 and the rear shaft 140. The first side 202 of the support cone 144 is in contact with the central tie bolt 142. The second side 204 of the support cone 144 is inserted into a second annular groove 302 that is defined at an upstream side of the rear shaft 140. The first side 202 tightly contacts with the central tie bolt 142, such as by a shrink fitting. The second side 204 loosely contacts with the rear shaft 140.

A heat cover 304 is disposed adjacent to and upstream of the support cone 144. The heat cover 304 has a first plate 306 and a second plate 308 that forms a L shaped cross section. The first plate 306 and the second plate 308 are cylindrical plates around the central axis 112. The first plate 306 extends parallel to the central axis 112 through a gap 310 that is defined between the rotor disk 136 and the rear shaft 140. A first end 312 of the first plate 306 is inserted into a third annular groove 316 that is defined at a downstream side of the rotor disk 136. The first end 312 loosely contacts with the rotor disk 136. A second end 314 of the first plate 306 is connected to the second plate 308. The second plate 308 extends between the central tie bolt 142 and the first plate 306. The second plate 308 tightly contacts with the central tie bolt 142, such as by a shrink fitting. A metering hole 318 is defined through the first plate 306 in a section that is within the gap 310 to exit the cooling flow 222 out of the rotor disk 136 from the cooling flow path 218.

The support cone 144 and the heat cover 304 are disposed within the space 146. The heat cover 304 separates the space 146 into the cooling flow path 218 and the cone space 220. The cooling flow path 218 allows a passage of a cooling flow 222 and guides the cooling flow 222 to the turbine section 106. The cone space 220 does not pass the cooling flow 222. The support cone 144 is disposed within the cone space 220.

In operation, the support cone 144 expands in a radial direction due to centrifugal forces and thermal expansion. As such, the second side 204 of the support cone 144 moves radially outward within the first annular groove 206 in the first portion 200 and moves radially outward within the second annular groove 302 in the second portion 300. The support cone 144 is bent due to the radially outward movement. The central tie bolt 142 is thereby supported by the support cone 144.

The cooling flow 222 is extracted from the compressor section 102 and guided through the rotor disks 136 into the cooling flow path 218. The cooling flow 222 flows through the cooling flow path 218 toward the turbine section 106 to cool the rotor 134. The cooling flow 222 is guided out of the rotor disk 136 through the metering hole 318.

The heat covers 208 and 304 protect the support cone 144 from quickly heating up and separates the support cone 144 from the cooling flow 222. As such, a proper contact is maintained between the support cone 144 and the central tie bolt 142 so that the central tie bolt 142 is sufficiently supported by the support cone 144.

As illustrated in FIG. 2, in the first portion 200, which may be in the mid section, the heat cover 208 also keeps the support cone 144 axially deep in the rotor disk 136. As illustrated in FIG. 3, in the second portion 300, which may be in the rear section, the heat cover 304 also includes the metering hole 318 to guide the cooling flow 222 out of the rotor disk 136. The metering hole 318 can be easily machined in the heat cover 304.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

### LISTING OF DRAWING ELEMENTS

100 gas turbine engine
102 compressor section
104 combustion section
106 turbine section
108 inlet section
110 exhaust portion
112 central axis
114 compressor stage
116 stationary compressor vane
118 rotating compressor blade
120 combustor
122 exhaust gas
124 turbine stage
126 stationary turbine vane
128 rotating turbine blade
130 turbine inlet
132 control system
134 rotor
136 rotor disk
138 front shaft
140 rear shaft
142 central tie bolt
144 support cone
146 space
200 first portion
202 first side
204 second side
206 first annular groove
208 heat cover
210 first plate
212 second plate
214 first end
216 second end
218 cooling flow path
220 cone space
222 cooling flow
300 second portion
302 second annular groove
304 heat cover
306 first plate
308 second plate
310 gap
312 first end
314 second end
316 third annular groove
318 metering hole

## Claims

1. A rotor (134) comprising:
a rotor disk (136);
a rear shaft (140) disposed downstream of the rotor disk (136);
a central tie bolt (142) that extends along a central axis (112) and connects the rotor disk (136) and the rear shaft (140) in a direction parallel to the central axis (112), the central tie bolt (142) being surrounded by the rotor disk (136) and the rear shaft (140);
a space (146) formed between the central tie bolt (142), the rotor disk (136), and the rear shaft (140);
a support cone (144) disposed within the space (146) that supports the central tie bolt (142), a first side (202) of the support cone (144) being in contact with the central tie bolt (142); and
a heat cover (208) disposed adjacent to the support cone (144) to separate the space (146) into a cooling flow path (218) to allow a passage of a cooling flow (222) and a cone space (220) in which the cooling flow (222) does not pass, the support cone (144) disposed within the cone space (220).

2. The rotor (134) of claim 1, further comprising a downstream rotor disk (136) that is connected to the central tie bolt (142) and arranged directly adjacent to a downstream side of the rotor disk (136), wherein the support cone (144) is disposed between the rotor disk (136) and the downstream rotor disk (136).

3. The rotor (134) of claim 2, wherein a first annular groove (206) is defined at the downstream side of the rotor disk (136), and wherein a second side (204) of the support cone (144) is inserted into the first annular groove (206).

4. The rotor (134) of claim 2, wherein the heat cover (208) is disposed downstream of the support cone (144).

5. The rotor (134) of claim 2, wherein the heat cover (208) comprises a first plate (210) and a second plate (212) forming a T shaped cross section, and wherein the first plate (210) and the second plate (212) are cylindrical plates around the central axis (112).

6. The rotor (134) of claim 5, wherein the first plate (210) extends parallel to the central axis (112), wherein a first end (214) of the first plate (210) is disposed radially outward of the support cone (144), and wherein a second end (216) of the first plate (210) is disposed radially downward of the downstream rotor disk (136).

7. The rotor (134) of claim 6, wherein the second plate (212) is connected to the first plate (210) and extends between the central tie bolt (142) and the first plate (210).

8. The rotor (134) of claim 1, wherein the rotor disk (136) is disposed directly adjacent to an upstream side of the rear shaft (140), and wherein the support cone (144) is disposed between the rotor disk (136) and the rear shaft (140).

9. The rotor (134) of claim 8, wherein a second annular groove (302) is defined at the upstream side of the rear shaft (140), and wherein a second side (204) of the support cone (144) is inserted into the second annular groove (302).

10. The rotor (134) of claim 8, wherein the heat cover (208) is disposed upstream of the support cone (144).

11. The rotor (134) of claim 8, wherein the heat cover (208) comprises a first plate (306) and a second plate (308) forming a L shaped cross section, wherein the first plate (306) and the second plate (308) are cylindrical plates around the central axis (112).

12. The rotor (134) of claim 11, wherein a third annular groove (316) is defined at a downstream side of the rotor disk (136), and wherein a first end (312) of the first plate (306) is inserted into the third annular groove (316), and wherein a second end (314) of the first plate (306) is connected to the second plate (308).

13. The rotor (134) of claim 11, wherein a gap (310) is defined between the rotor disk (136) and the rear shaft (140), and wherein the first plate (306) extends parallel to the central axis (112) and through the gap (310).

14. The rotor (134) of claim 13, wherein the second plate (308) is connected to the first plate (306) and extends between the central tie bolt (142) and the first plate (306).

15. The rotor (134) of claim 13, wherein a metering hole (318) is defined through the first plate (306) in a section that is within the gap (310).
